# EUROPEAN PATENT APPLICATION

(11) **EP 4 718 745 A1**
(43) Date of publication of application: **01.04.2026**
(21) Application number: 24214251.1
(22) Date of filing: 20.11.2024
(51) Int. Cl.: H04B 10/079, H04B 10/293, H04B 10/564

(54) **POWER AUTO-TUNING IN OPTICAL TRANSCEIVERS BASED ON OUT-OF-BAND COMMUNICATION**

(30) Priority: 30.09.2024 CN 202411391569; 17.10.2024 US 202418918649
(71) Applicant: Finisar Shanghai Incorporation, Shanghai 201114 (CN)
(72) Inventor: JING, Li, Wilmington, 19890 (US); QUN, Ge, Wilmington, 19890 (US); PUHUI, Miao, Wilmington, 19890 (US)
(74) Representative: Schmidt, Christian

(57) **Abstract**

Systems and methods are provided for power auto-tuning in optical transceivers based on out-of-band communication.

## Description

### CLAIM OF PRIORITY

This patent application claims priority to and claims benefit from Chinese (CN) Patent Application Serial No. 2024113915695, filed on September 30, 2024. The above identified application is hereby incorporated herein by reference in its entirety.

### TECHNICAL FIELD

Aspects of the present disclosure relate to optical communication related solutions. More specifically, certain implementations of the present disclosure relate to methods and systems for implementing and utilizing power auto-tuning in optical transceivers based on out-of-band communication.

### BACKGROUND

Limitations and disadvantages of conventional and traditional devices and solutions for transmitting and receiving optical signals will become apparent to one of skill in the art, through comparison of such systems with some aspects of the present disclosure as set forth in the remainder of the present application with reference to the drawings.

### BRIEF SUMMARY

System and methods are provided for power auto-tuning in optical transceivers based on out-of-band communication, substantially as shown in and/or described in connection with at least one of the figures, as set forth more completely in the claims.

These and other advantages, aspects and novel features of the present disclosure, as well as details of an illustrated embodiment thereof, will be more fully understood from the following description and drawings.

### BRIEF DESCRIPTION OF THE DRAWINGS

Fig. 1 illustrates an example optical transceiver.
Fig. 2 illustrates an example optical arrangement that may be configured to utilize power auto-tuning in optical transceivers using out-of-band communication.
Fig. 3 illustrates an example use case scenario when utilizing power auto-tuning in optical transceivers using out-of-band communication.
Fig. 4 illustrates a flowchart of an example process for power auto-tuning in optical transceivers using out-of-band communication.

### DETAILED DESCRIPTION

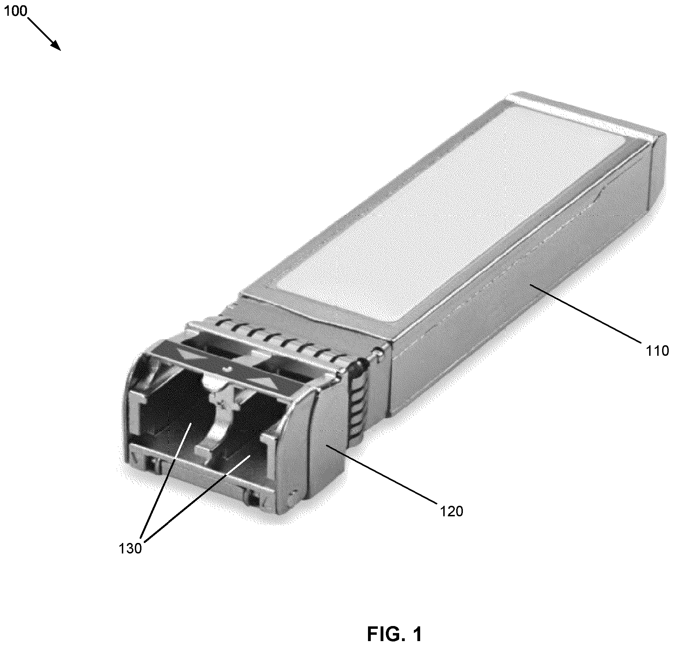

The present disclosure is directed to optical communication based solutions. In particular, implementations based on the present disclosure pertain to optical transceivers, and specifically to enhance operation thereof. In this regard, an optical device may typically incorporate optical receptacles, which may be driven by optical transceivers, for use in facilitating optical communication, particularly when the optical devices are engaged (e.g., plugged into) optical ports. It is desirable to optimize operation of the optical transceivers, particularly to guard against any physical damage that may occur to the optical transceivers. Solutions based on the present disclosure achieve such desirable objectives, particularly by use of a new mechanism for automatically tuning or leveling transmit optical power, to ensure that the receive related elements in a peer optical transceiver are not damaged during optical communication. These solutions are described in more detail with respect to Figs. 1-4 below.

Fig. 1 illustrates an example optical transceiver. Shown in Fig. 1 is an optical transceiver 100 (or portion thereof).

As shown in the example implementation illustrated in Fig. 1, the optical transceiver 100 comprises a housing 110 and a connector block 120. The housing 110 encloses and/or houses internal components of the optical transceiver 100, particularly the optical transceiver related components and/or circuitry, as well other components and circuitry used in providing or facilitating optical based communication to/from the optical transceiver 100. For example, housing 110 may house such components as an optical emitting component (e.g., transmitter optical sub-assembly (TOSA)), an optical receiving component (e.g., receiver optical sub-assembly (ROSA)) an optical driver (e.g., laser driver), an amplifier circuit, and a controller circuit.

In some instances, the housing 110 may also incorporate a heat sink (not shown), which is configured for dissipating heat generated by the internal components of the optical transceiver 100.

The connector block 120 is configured for providing optical connectivity related function, particularly by engaging corresponding optical port(s) (e.g., one or more plug-in ports). To that end, the connector block 120 may be specifically designed or implemented to physically fit into or otherwise engage particular optical ports. For example, the connector block 120 may comprise one or more optical receptacles 130 which are used to provide optical communication when the optical transceiver 100 is connected to (e.g., plugged into) corresponding optical port(s), with the optical receptacles 130 mating with corresponding optical plugs.

As shown in Fig. 1 (and the remaining figures) the connector block 120 may house two (2) optical receptacles 130, with one optical receptacle 130 being used as an optical receiver and the other optical receptacle 130 being used as an optical transmitter. Nonetheless, it should be readily understood that the disclosure is not necessarily limited to such implementation, and that any configuration that allows for concurrent optical transmission and reception operation may be used. The optical receptacles 130 may be connected to the optical transceiver related components and/or circuitry within the housing 110.

In some instances, the connector block 120 may incorporate or be coupled to a latch port tap (not shown), which would allow extraction of the optical transceiver from the port.

In operation, the optical transceiver 100 may be utilized in an optical arrangement (e.g., fiber network) to provide and/or facilitate optical communication. The optical transceiver 100 may be plugged, via the connector block 120, into corresponding suitable optical port(s). Once plugged in and powered on, the optical transceiver 100 may provide optical communication via the optical receptacles 130, with the optical transceiver related components and/or circuitry within the housing 110 providing the processing and other functions needed for facilitating the optical communication. During such operation the optical transceiver 100 may be operable to provide one or both of optical transmission and optical reception. In some instances, the optical transceiver 100 may be configured to perform optical transmission and optical reception concurrently. For example, the optical transceiver 100 may be operable to perform optical transmission via one optical receptacle 130 while performing optical reception via another optical receptacle 130.

Some challenges and/or issues may arise in optical communications, however. For example, in some instances, under certain conditions, the output (transmit) power of an optical transceiver may adversely affect optical receiver related elements at a peer optical transceiver. While such adverse effects may typically be limited to interference or the like, in some instances the adverse effects may include physical damage to the optical receiver (Rx) elements at the peer optical transceiver. Such physical damage to the Rx elements may occur, e.g., when the connection between the peer optical transceivers is too short for the transmit optical power being used. In this regard, normally the output power of the optical transceiver is >0dBm, while the Rx damage power-that is, power experienced at the optical transceiver during optical reception that may result in physical damage to the optical receiver (Rx) elements of the optical transceiver-is <0dBm, especially in certain types of implementations, such as avalanche photodiode (APD) Rx solutions. For example, in some instances the Rx damage power may be around -4 dBm. In such instances, where the optical receiver (Rx) is directly connected to the optical transmitter (Tx), it may be more likely that the optical receiver (Rx) is damaged.

Conventional solutions for addressing such issues may not be adequate and/or may have some limitations and/or disadvantages. For example, while such issues may be mitigated by reducing the TX power, doing so may not be desirable. In this regard, reducing the Tx power may degrade performance of the optical communication. For example, in instances where the Rx damage power may be around -4 dBm, reducing the Tx power below -5dBm may adversely affect the transmission distance, which may worsen performance of optical communications as a whole. Other possible solutions may include adding an attenuator between the optical transmitter (Tx) and the optical receiver (Rx), such as during testing and during use case scenarios where the fiber between the two optical transceivers is short, and/or configuring the transmit (Tx) optical power of the optical transceiver manually, such as via the host interface, based on, e.g., the fiber length/insertion loss between the two optical transceivers. Such approaches result in added cost, complexity, and inflexibility.

Solutions based on the present disclosure may address Rx damage power related issues in a manner that overcomes the limitations and/or disadvantages of any conventional solutions, and without affecting the overall performance and/or quality of the optical communication. In particular, in various implementations based on the present disclosure, power auto-tuning (or auto-leveling) may be used in optical arrangements, with the transmit (Tx) optical power being adaptively and automatically set and/or adjusted to ensure that receiver elements (or functions thereof) in the peer optical transceivers are not damaged, and doing so without degrading performance.

In some example implementations, the Tx optical output power may be auto-tuned based on peer-side power related data, including peer-side power related data obtained from the peer optical transceiver. Further, peer-side power related data may be communicated using connections other than the optical connections between the peer optical transceivers. In particular, peer-side power related data may be provided using out-of-band (OOB) communication between peer optical transceivers. In this regard, already existing out-of-band (OOB) channel(s) may be utilized, with peer optical transceivers being configured to utilize the OOB channel(s) for the power auto-tuning (e.g., to exchange data relating to power auto-tuning operations). Alternatively, where no such out-of-band (OOB) channel(s) already exist, peer optical transceivers may be configured to set up such channel(s), and then use such channel(s) during power auto-tuning. The out-of-band (OOB) channel(s) may be set up using optical connections but may be configured differently than channels used for data transfer.

Use of OOB communication may have various advantages. In this regard, the frequency of OOB communication may be significantly lower than that of the data traffic (via the optical connections between the peer optical transceivers) and the modulation depth may be limited, and as such OOB communication may not impact the data traffic. Further, the sensitivity of the OOB communication may be much better than (e.g., >6dB) the sensitivity of the data traffic.

In some example implementations, the Tx optical output power of an optical transceiver may be set lower than a pre-set value (e.g., Rx damage power of the peer optical transceiver if known, or a preset value corresponding to expected Rx damage power of the peer optical transceiver) when the optical transceiver is powered on, and the optical transceiver may continue to monitor the Rx power information of the peer optical transceiver, such as using OOB communication via OOB channel(s). Once the Rx power of the peer optical transceiver is determined to be lower than the pre-set threshold, the optical transceiver may increase the Tx optical power.

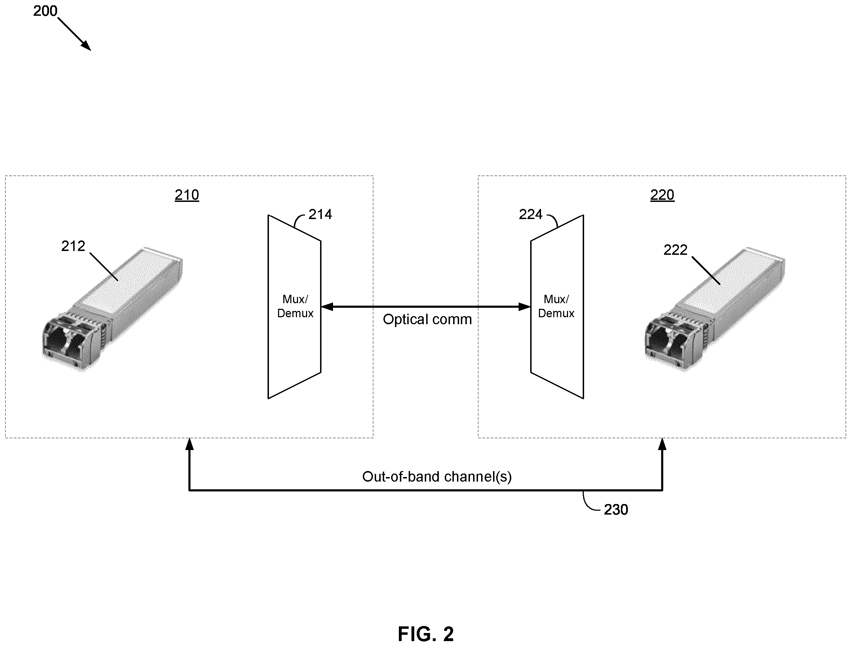

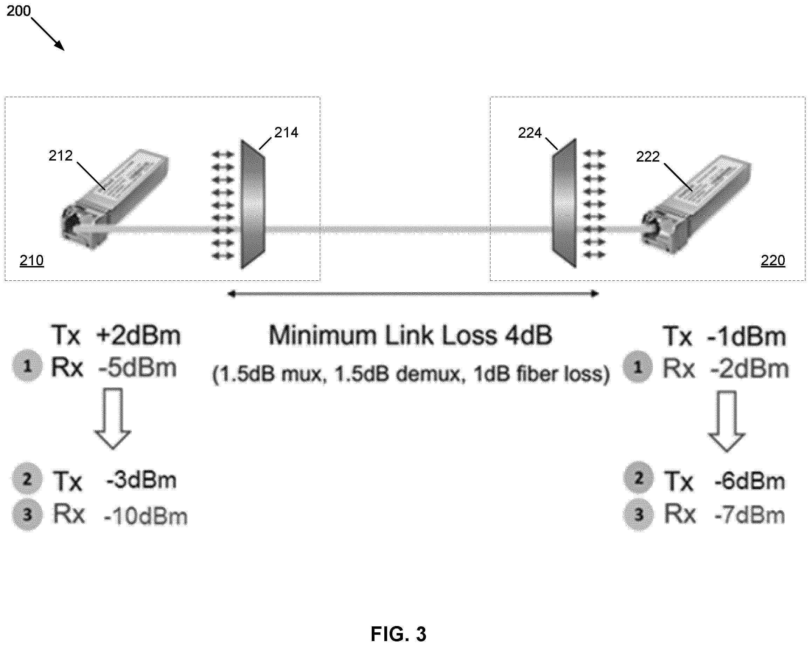

An example optical arrangement incorporating an embodiment based on the present disclosure and a use case scenario associated therewith are illustrated in and described with respect to Figs. 2 and 3.

Fig. 2 illustrates an example optical arrangement that may be configured to utilize power auto-tuning in optical transceivers using out-of-band communication. Shown in Fig. 2 is an optical arrangement 200.

The optical arrangement 200 comprises two optical devices (or peers) 210 and 220, each comprising suitable components and circuitry for facilitating optical communication (e.g., with an optical network). In particular, the optical devices 210 and 220 comprise, respectively, optical transceivers 212 and 222. Each of the optical transceivers 212 and 222 may be substantially similar to the optical transceiver 100 as described with respect to Fig. 1. The optical devices 210 and 220 additionally may comprise components which may be used, in conjunction with the optical transceivers 212 and 222, in facilitating optical communication. For example, the optical devices 210 and 220 comprise, respectively, a multiplexer/demultiplexer (Mux/Demux) 214 and a multiplexer/demultiplexer (Mux/Demux) 224. Each of the Mux/Demux 214 and Mux/Demux 224 may comprise suitable circuitry for providing multiplexing and/or demultiplexing of optical signals communicated by the optical devices 210 and 220-namely, by the optical transceivers 212 and 222.

In operation, the optical devices 210 and 220 may be configured to perform optical communication, such as within an optical network. In this regard, in some instances the optical transceivers 212 and 222 of the optical devices 210 and 220 may be configured to support or use concurrent optical transmission and optical reception. As noted, such concurrent optical transmission and optical reception may pose or create some issues, such as the risk of damaging receiver (Rx) related elements.

In accordance with the present disclosure, optical arrangements (e.g., the optical arrangement 200) and/or optical devices therein (e.g., the optical devices 210 and 220) may be configured to utilize power auto-tuning to guard against and mitigate such issues, with the transmit (Tx) optical power being adaptively and automatically set and/or adjusted to ensure optimal performance without damaging receiver elements (or functions thereof) in the peer optical transceivers. The power auto-tuning, and power control/management functions in general, may be handled by any suitable circuitry in the optical devices 210 and 220, such as directly by the optical transceivers 212 and 222, or by general control circuitry and/or dedicated power control circuitry (not shown).

In this regard, in various example implementations, out-of-band (OOB) communication may be utilized to enable the optical peers (e.g., the optical devices 210 and 220) to implement and use automatic power control, to ensure that transmit (Tx) optical power at each optical transceiver remains within safe ranges with respect to potential damage to the receiver (Rx) elements at peer optical transceiver(s), while also ensuring that the Tx optical power is sufficient to optimize (e.g., maintain acceptable) performance of the optical communication.

The out-of-band (OOB) communication may be performed using one or more out-of-band (OOB) channels 230. In this regard, the OOB channels 230 may be optical channels in the same optical link between the optical devices 210 and 220, with the OOB communication comprising, e.g., low frequency signals communicated via the same Mux/Demux path between the optical devices used in communicating data transfer based signals. However, the disclosure is not limited to such implementation, and as any suitable arrangement for setting up and utilizing OOB channels/communication may be used, including arrangements where the OOB communication is performed outside of the Mux/Demux path. The optical devices 210 and 220 may be configured to provided required processing for facilitating the OOB communication. For example, the optical transceivers 212 and 222 may be configured to adjust amplifier gain and/or add in attenuation, such as using variable optical attenuator (using a VOA), to facilitate the communication of low frequency signals used in the OOB communication.

In some instances, optical arrangements may be normally configured to set up and use the out-of-band (OOB) channels 230, and as such the optical arrangement may simply be configured to use these channels during power auto-tuning operations. Alternatively, in instances where the optical arrangement does not normally set up or use such channels, the optical arrangement may be modified and/or configured to set up out-of-band (OOB) channel(s), for use in facilitating power auto-tuning operations.

The power auto-tuning may be performed in accordance with a particular power control scheme. For example, the Tx optical output power of the optical transceiver may be set lower than a pre-set threshold which may correspond to the Rx damage power of the peer optical transceiver, when the optical transceiver is powered on. The optical transceiver may then keep monitoring the Rx power information of the peer optical transceiver, and may adjust the Tx optical power based on the monitoring. For example, in instances where the Rx damage power of a peer optical transceiver is determined to be lower than the pre-set threshold, the optical transceiver may increase the Tx optical power. The monitoring of the Rx power information may comprise obtaining the Rx power information of the peer optical transceiver using OOB communication via the OOB channel(s).

An example use case scenario in the optical arrangement 200 in accordance with an example implementation based on the present disclosure is illustrated in and described with respect to Fig. 3.

Fig. 3 illustrates an example use case scenario when utilizing power auto-tuning in optical transceivers using out-of-band communication. Shown in Fig. 3 is the optical arrangement 200 of Fig. 2, with power auto-tuning being performed therein in accordance with an example implementation.

As shown in the example use case scenario illustrated in Fig. 3, at the start of the scenario (e.g., when the optical transceivers 212 and 222 are plugged in and/or powered on), each of the optical transceivers 212 and 222 may be configured to utilize an initial set value for transmit (Tx) optical power-e.g., 2dBm for the optical transceiver 212 and -1dBm for the optical transceiver 222. The receive (Rx) optical power at each of the optical transceivers may be lower than the Tx optical power at the corresponding peer optical transceiver, e.g., as a result of losses during the optical communication-e.g., losses in the link between the optical devices. In this regard, minimum link loss(es) may comprise losses in the fiber as well as other losses in components (other than the optical transceivers) used in communicating the optical signals.

For example, in the optical arrangement 200, the minimum link loss between the two optical devices may be 4dB, corresponding to 1dB loss in the fiber connection, 1.5dB loss during multiplexing at the transmit-side, and 1.5dB loss during multiplexing at the receive-side. Thus, accounting for the 4dB minimum link loss, based on the Tx optical power values noted above, the Rx optical power values at the optical transceivers 212 and 222 may be, respectively, -5dBm and -2dBm.

The optical transceivers 212 and 222 may exchange power related information, such as via the out-of-band (OOB) channel(s) 230, and power auto-tuning (power auto-leveling) may be triggered and used if necessary. In this regard, each of the optical transceivers 212 and 222 may share with the other optical transceiver information comprising, e.g., current Rx optical power and the Rx damage power. Where the Rx optical power at one of the optical transceivers exceeds the Rx damage power of that optical transceiver, the power auto-tuning may be applied to reduce the Tx optical power.

For example, in the optical arrangement 200, the maximum value (or decision point) for Rx optical power may be set -7dB, based on a -5dBm overload specification. As such, the Tx optical power of the optical transceivers 212 and 222 may be adjusted to reduce the Rx optical power to at least that decision point. Accordingly, the Tx optical power at the optical transceiver 212 is adjusted (reduced) from 2dBm to -3dBm, which results in the Rx optical power at the optical transceiver 222 decreasing from - 2dBm to -7dBm. A similar adjustment-that is, a reduction of -5dBm-is also applied to the Tx optical power at the optical transceiver 222, resulting in reduction in the Tx optical power from -1dBm to -6dBm, which results in the Rx optical power at the optical transceiver 212 decreasing from -5dBm to -10dBm.

In some instances, additional control information (e.g., thresholds) may also be used in the power auto-tuning scheme. For example, in addition to utilizing a maximum (high) threshold/limit for the level/value of Tx optical power (e.g., based on the Rx damage power of the peer), a minimum (low) threshold/limit for the level/value of Tx optical power may also be used, which may be determined or set to ensure that the Tx optical power does not drop below what is required to ensure that performance of the optical communication is not degraded or otherwise affected. For example, such minimum threshold may be determined to ensure hysteresis for a particular power decrement value-that is, sensitivity threshold. Referring to the optical arrangement 200, minimum value/threshold may be -13dBm to ensure 1 dB hysteresis for 5dB Tx power decrement - 13dBm can ensure 1dB Hysteresis for 5dB Tx Power decrement.

In some instances, the optical transceivers may have different Rx damage power values and/or other considerations that may be pertinent to power control functions at each of the optical transceivers, and as such one or more different values (e.g., different decision points, different maximum thresholds/limits, different minimum thresholds/limits, etc.) may be applied to or at the optical transceivers.

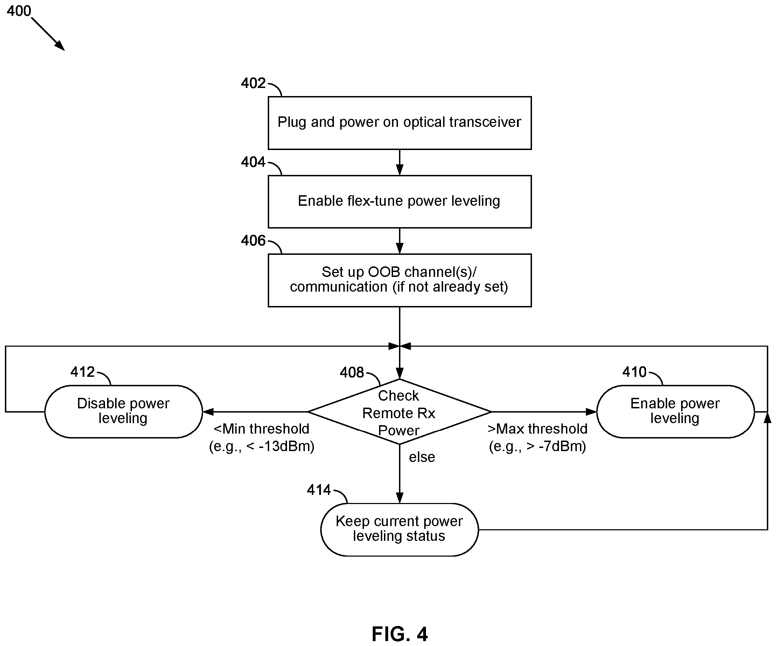

Fig. 4 illustrates a flowchart of an example process for power auto-tuning in optical transceivers using out-of-band communication. Shown in FIG. 4 is a flow chart 400, comprising a plurality of example steps (represented as blocks 402-414), which may be performed in a suitable system or arrangement (e.g., the arrangement 200 of Fig. 2) to provide power auto-tuning of optical transceivers.

In step 402, the system may be powered on, which entails powering on the optical transceivers. The powering on may comprise setting one or more out-of-band (OOB) channels.

In step 404, flex-tune power leveling is enabled.

In step 406, at least one out-of-band (OOB) channel is set up, if none is already set up, and the system or arrangement is configured for utilizing the at least one out-of-band (OOB) channel for power control related communication between the two optical transceivers.

In step 408, a check of the remote receiver (Rx) power may be performed. In instances where it is determined that the remote Rx power is greater than a pre-set maximum level, the process proceeds to step 410. The pre-set maximum level may be determined adaptively based on the optical arrangement. For example, the pre-set maximum level may be set to -7dBm in an example optical arrangement based on -5dBm overload specification.

In instances where it is determined that the remote Rx power is less than a pre-set minimum level, the process proceeds to step 412. The pre-set minimum level may be determined adaptively based on the optical arrangement. For example, the pre-set minimum level may be set to -13dBm in an example optical arrangement to ensure 1dB Hysteresis for 5dB Tx power decrement-that is, to ensure a particular sensitivity threshold.

In instances where it is determined that the remote Rx power is between the pre-set minimum level and the pre-set maximum level, the process proceeds to step 414.

In step 410, power leveling is (re-)enabled-that is, Tx power is re-set or adjusted based on remote Rx power information, and the process loops back to step 408.

In step 412, power leveling is disabled, and the process loops back to step 408.

In step 414, current power leveling status is maintained, and the process loops back to step 408.

An example system, according to present disclosure, comprises an optical transceiver comprising one or more of optical receptacles, where each optical receptacle is configured to engage a corresponding one of one or more optical receptacle mates; and transceiver circuitry configured to enable communication of optical signals via the one or more of optical receptacles. The optical transceiver is configured to establish an optical connection with a peer optical transceiver; set a transmit (Tx) optical power, used during transmission of optical signals to the peer optical transceiver, to a pre-determined initial value; and perform power auto-tuning of the transmit (Tx) optical power during optical communication with the peer optical transceiver via the optical connection. The optical transceiver is further configured to, when performing the power auto-tuning, obtain from the peer optical transceiver, peer-side power related data, where the peer-side power related data comprises receive (Rx) damage power of the peer optical transceiver; determine based on the peer-side power related data, a maximum value for a peer-side receive (Rx) optical power; and adjust the transmit (Tx) optical power to ensure that the peer-side receive (Rx) damage power is equal to or less than the maximum value.

In an example embodiment, the optical transceiver is further configured to obtain the peer-side power related data from the peer optical transceiver via out-of-band (OOB) communication.

In an example embodiment, the optical transceiver is further configured to perform the out-of-band (OOB) communication via one or more out-of-band (OOB) channels.

In an example embodiment, the optical transceiver is further configured to set up at least one of the one or more out-of-band (OOB) channels when performing power auto-tuning.

In an example embodiment, the optical transceiver is further configured to disable power auto-tuning when the peer-side receive (Rx) optical power is below a preset minimum level.

In an example embodiment, the optical transceiver is further configured to, when performing the power auto-tuning determine a minimum value for peer-side receive (Rx) optical power; and adjust the transmit (Tx) optical power to ensure that the peer-side receive (Rx) damage power is equal to or greater than the minimum value.

In an example embodiment, the optical transceiver is further configured to perform the power auto-tuning based on a minimum link loss for the optical communication.

In an example embodiment, the optical transceiver is further configured to determine the minimum link loss based on one or both of losses in optical connection and losses in one or more other components (other than the optical transceivers) used during the optical communication between the optical transceiver and the peer optical transceiver.

In an example embodiment, the system further comprises one or more other components configured for use during the optical communication between the optical transceiver and the peer optical transceiver.

In an example embodiment, the one or more other components comprise a multiplexer/demultiplexer (Mux/Demux) circuit associated with each of the optical transceiver and the peer optical transceiver.

An example method, according to present disclosure, comprises establishing by an optical transceiver, an optical connection with a peer optical transceiver; setting at the optical transceiver, a transmit (Tx) optical power used during transmission of optical signals to the peer optical transceiver, to a pre-determined initial value; and performing at the optical transceiver, power auto-tuning of the transmit (Tx) optical power during optical communication with the peer optical transceiver via the optical connection, where the power auto-tuning comprises obtaining, from the peer optical transceiver, peer-side power related data, and where the peer-side power related data comprises receive (Rx) damage power of the peer optical transceiver; determining based on the peer-side power related data, a maximum value for a peer-side receive (Rx) optical power; and adjusting the transmit (Tx) optical power to ensure that the peer-side receive (Rx) damage power is equal to or less than the maximum value.

In an example embodiment, the method further comprises obtaining the peer-side power related data from the peer optical transceiver via out-of-band (OOB) communication.

In an example embodiment, the method further comprises performing the out-of-band (OOB) communication via one or more out-of-band (OOB) channels.

In an example embodiment, the method further comprises setting up at least one of the one or more out-of-band (OOB) channels when performing power auto-tuning.

In an example embodiment, the method further comprises disabling power auto-tuning when the peer-side receive (Rx) optical power is below a preset minimum level.

In an example embodiment, the power auto-tuning further comprises determining a minimum value for peer-side receive (Rx) optical power; and adjusting the transmit (Tx) optical power to ensure that the peer-side receive (Rx) damage power is equal to or greater than the minimum value.

In an example embodiment, the method further comprises performing the power auto-tuning based on a minimum link loss for the optical communication.

In an example embodiment, the method further comprises determining the minimum link loss based on one or both of losses in optical connection and losses in one or more other components (other than the optical transceivers) used during the optical communication between the optical transceiver and the peer optical transceiver.

In an example embodiment, the method further comprises performing one or more processing functions during the optical communication between the optical transceiver and the peer optical transceiver.

In an example embodiment, the one or more processing functions comprise multiplexing and/or demultiplexing.

The present disclosure claims the priorities of CN patent application CN 2024113915695 filed on September 30, 2024 and of U.S. patent application 18/918,649 filed on October 17, 2024. The entire disclosure of these applications is hereby explicitly incorporated by reference into the present disclosure.

Embodiments of the present disclosure may relate to systems and methods which are provided for power auto-tuning in optical transceivers based on out-of-band communication.

In the following, a set of aspects is disclosed. The aspects are numbered to facilitate referencing the features of one aspect in other aspects. The aspects form part of the disclosure of the present application and could be made subject to independent and/or dependent claims irrespective of what currently is claimed in the application. The aspects are:
1. A system for power auto-tuning, the system comprising:
   an optical transceiver comprising:
      one or more of optical receptacles, wherein each optical receptacle is configured to engage a corresponding one of one or more optical receptacle mates; and
      transceiver circuitry configured to enable communication of optical signals via the one or more of optical receptacles;
   wherein the optical transceiver is configured to:
      establish an optical connection with a peer optical transceiver;
   set a transmit (Tx) optical power, used during transmission of optical signals to the peer optical transceiver, to a pre-determined initial value; and
   perform power auto-tuning of the transmit (Tx) optical power during optical communication with the peer optical transceiver via the optical connection, wherein the optical transceiver is further configured to, when performing the power auto-tuning:
      obtain from the peer optical transceiver, peer-side power related data, wherein the peer-side power related data comprises receive (Rx) damage power of the peer optical transceiver;
      determine based on the peer-side power related data, a maximum value for a peer-side receive (Rx) optical power; and
      adjust the transmit (Tx) optical power to ensure that the peer-side receive (Rx) damage power is equal to or less than the maximum value.
2. The system of aspect 1, wherein the optical transceiver is further configured to obtain the peer-side power related data from the peer optical transceiver via out-of-band (OOB) communication.
3. The system of aspect 2, wherein the optical transceiver is further configured to perform the out-of-band (OOB) communication via one or more out-of-band (OOB) channels.
4. The system of aspect 3, wherein the optical transceiver is further configured to set up at least one of the one or more out-of-band (OOB) channels when performing power auto-tuning.
5. The system of aspect 1, wherein the optical transceiver is further configured to disable power auto-tuning when the peer-side receive (Rx) optical power is below a preset minimum level.
6. The system of aspect 1, wherein the optical transceiver is further configured to, when performing the power auto-tuning:
   determine a minimum value for peer-side receive (Rx) optical power; and
   adjust the transmit (Tx) optical power to ensure that the peer-side receive (Rx) damage power is equal to or greater than the minimum value.
7. The system of aspect 1, wherein the optical transceiver is further configured to perform the power auto-tuning based on a minimum link loss for the optical communication.
8. The system of aspect 7, wherein the optical transceiver is further configured to determine the minimum link loss based on one or both of losses in optical connection and losses in one or more other components (other than the optical transceivers) used during the optical communication between the optical transceiver and the peer optical transceiver.
9. The system of aspect 1, further comprising one or more other components configured for use during the optical communication between the optical transceiver and the peer optical transceiver.
10. The system of aspect 9, wherein the one or more other components comprise a multiplexer/demultiplexer (Mux/Demux) circuit associated with each of the optical transceiver and the peer optical transceiver.
11. A method for power auto-tuning, the method comprising:
   establishing by an optical transceiver, an optical connection with a peer optical transceiver;
   setting at the optical transceiver, a transmit (Tx) optical power, used during transmission of optical signals to the peer optical transceiver, to a pre-determined initial value; and performing at the optical transceiver, power auto-tuning of the transmit (Tx) optical power during optical communication with the peer optical transceiver via the optical connection, wherein the power auto-tuning comprises:
      obtaining, from the peer optical transceiver, peer-side power related data, wherein the peer-side power related data comprises receive (Rx) damage power of the peer optical transceiver;
      determining based on the peer-side power related data, a maximum value for a peer-side receive (Rx) optical power; and
      adjusting the transmit (Tx) optical power to ensure that the peer-side receive (Rx) damage power is equal to or less than the maximum value.
12. The method of aspect 11, further comprising obtaining the peer-side power related data from the peer optical transceiver via out-of-band (OOB) communication.
13. The method of aspect 12, further comprising performing the out-of-band (OOB) communication via one or more out-of-band (OOB) channels.
14. The method of aspect 13, further comprising setting up at least one of the one or more out-of-band (OOB) channels when performing power auto-tuning.
15. The method of aspect 11, further comprising disabling power auto-tuning when the peer-side receive (Rx) optical power is below a preset minimum level.
16. The method of aspect 11, wherein the power auto-tuning further comprises:
   determining a minimum value for peer-side receive (Rx) optical power; and
   adjusting the transmit (Tx) optical power to ensure that the peer-side receive (Rx) damage power is equal to or greater than the minimum value.
17. The method of aspect 11, further comprising performing the power auto-tuning based on a minimum link loss for the optical communication.
18. The method of aspect 17, further comprising determining the minimum link loss based on one or both of losses in optical connection and losses in one or more other components (other than the optical transceivers) used during the optical communication between the optical transceiver and the peer optical transceiver.
19. The method of aspect 11, further comprising performing one or more processing functions during the optical communication between the optical transceiver and the peer optical transceiver.
20. The method of aspect 19, wherein the one or more processing functions comprise multiplexing and/or demultiplexing.

As utilized herein, "and/or" means any one or more of the items in the list joined by "and/or". As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y and/or z" means "one or more of x, y, and z." As utilized herein, the term "exemplary" means serving as a non-limiting example, instance, or illustration. As utilized herein, the terms "for example" and "e.g." set off lists of one or more non-limiting examples, instances, or illustrations.

As utilized herein the terms "circuits" and "circuitry" refer to physical electronic components (e.g., hardware), and any software and/or firmware ("code") that may configure the hardware, be executed by the hardware, and or otherwise be associated with the hardware. As used herein, for example, a particular processor and memory (e.g., a volatile or non-volatile memory device, a general computer-readable medium, etc.) may comprise a first "circuit" when executing a first one or more lines of code and may comprise a second "circuit" when executing a second one or more lines of code. Additionally, a circuit may comprise analog and/or digital circuitry. Such circuitry may, for example, operate on analog and/or digital signals. It should be understood that a circuit may be in a single device or chip, on a single motherboard, in a single chassis, in a plurality of enclosures at a single geographical location, in a plurality of enclosures distributed over a plurality of geographical locations, etc. Similarly, the term "module" may, for example, refer to a physical electronic component (e.g., hardware) and any software and/or firmware ("code") that may configure the hardware, be executed by the hardware, and or otherwise be associated with the hardware.

As utilized herein, circuitry or module is "operable" to perform a function whenever the circuitry or module comprises the necessary hardware and code (if any is necessary) to perform the function, regardless of whether performance of the function is disabled or not enabled (e.g., by a user-configurable setting, factory trim, etc.).

Other embodiments of the invention may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the processes as described herein.

Accordingly, various embodiments in accordance with the present invention may be realized in hardware, software, or a combination of hardware and software. The present invention may be realized in a centralized fashion in at least one computing system, or in a distributed fashion where different elements are spread across several interconnected computing systems. Any kind of computing system or other apparatus adapted for carrying out the methods described herein is suited. A typical implementation may comprise one or more application specific integrated circuit (ASIC), one or more field programmable gate array (FPGA), and/or one or more processor (e.g., x86, x64, ARM, PIC, and/or any other suitable processor architecture) and associated supporting circuitry (e.g., storage, DRAM, FLASH, bus interface circuits, etc.). Each discrete ASIC, FPGA, Processor, or other circuit may be referred to as "chip," and multiple such circuits may be referred to as a "chipset." Another implementation may comprise a non-transitory machine-readable (e.g., computer readable) medium (e.g., FLASH drive, optical disk, magnetic storage disk, or the like) having stored thereon one or more lines of code that, when executed by a machine, cause the machine to perform processes as described in this disclosure. Another implementation may comprise a non-transitory machine-readable (e.g., computer readable) medium (e.g., FLASH drive, optical disk, magnetic storage disk, or the like) having stored thereon one or more lines of code that, when executed by a machine, cause the machine to be configured (e.g., to load software and/or firmware into its circuits) to operate as a system described in this disclosure.

Various embodiments in accordance with the present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. Therefore, it is intended that the present method and/or system is not limited to the particular implementations disclosed, but that the present method and/or system will include all implementations falling within the scope of the appended claims.

## Claims

1. A system for power auto-tuning, the system comprising:
an optical transceiver comprising:
one or more of optical receptacles, wherein each optical receptacle is configured to engage a corresponding one of one or more optical receptacle mates; and
transceiver circuitry configured to enable communication of optical signals via the one or more of optical receptacles;
wherein the optical transceiver is configured to:
establish an optical connection with a peer optical transceiver;
set a transmit (Tx) optical power, used during transmission of optical signals to the peer optical transceiver, to a pre-determined initial value; and
perform power auto-tuning of the transmit (Tx) optical power during optical communication with the peer optical transceiver via the optical connection, wherein the optical transceiver is further configured to, when performing the power auto-tuning:
obtain from the peer optical transceiver, peer-side power related data, wherein the peer-side power related data comprises receive (Rx) damage power of the peer optical transceiver;
determine based on the peer-side power related data, a maximum value for a peer-side receive (Rx) optical power; and
adjust the transmit (Tx) optical power to ensure that the peer-side receive (Rx) damage power is equal to or less than the maximum value.

2. The system of claim 1, wherein the optical transceiver is further configured to obtain the peer-side power related data from the peer optical transceiver via out-of-band (OOB) communication.

3. The system of claim 2, wherein the optical transceiver is further configured to perform the out-of-band (OOB) communication via one or more out-of-band (OOB) channels.

4. The system of claim 3, wherein the optical transceiver is further configured to set up at least one of the one or more out-of-band (OOB) channels when performing power auto-tuning.

5. The system of any one of claims 1 to 4, wherein the optical transceiver is further configured to disable power auto-tuning when the peer-side receive (Rx) optical power is below a preset minimum level.

6. The system of any one of claims 1 to 5, wherein the optical transceiver is further configured to, when performing the power auto-tuning:
determine a minimum value for peer-side receive (Rx) optical power; and
adjust the transmit (Tx) optical power to ensure that the peer-side receive (Rx) damage power is equal to or greater than the minimum value.

7. The system of any one of claims 1 to 6, wherein the optical transceiver is further configured to perform the power auto-tuning based on a minimum link loss for the optical communication.

8. The system of claim 7, wherein the optical transceiver is further configured to determine the minimum link loss based on one or both of losses in optical connection and losses in one or more other components (other than the optical transceivers) used during the optical communication between the optical transceiver and the peer optical transceiver.

9. The system of any one of claims 1 to 8, further comprising one or more other components configured for use during the optical communication between the optical transceiver and the peer optical transceiver.

10. The system of claim 9, wherein the one or more other components comprise a multiplexer/demultiplexer (Mux/Demux) circuit associated with each of the optical transceiver and the peer optical transceiver.

11. A method for power auto-tuning, the method comprising:
establishing by an optical transceiver, an optical connection with a peer optical transceiver;
setting at the optical transceiver, a transmit (Tx) optical power, used during transmission of optical signals to the peer optical transceiver, to a pre-determined initial value; and
performing at the optical transceiver, power auto-tuning of the transmit (Tx) optical power during optical communication with the peer optical transceiver via the optical connection, wherein the power auto-tuning comprises:
obtaining, from the peer optical transceiver, peer-side power related data, wherein the peer-side power related data comprises receive (Rx) damage power of the peer optical transceiver;
determining based on the peer-side power related data, a maximum value for a peer-side receive (Rx) optical power; and
adjusting the transmit (Tx) optical power to ensure that the peer-side receive (Rx) damage power is equal to or less than the maximum value.

12. The method of claim 11, further comprising obtaining the peer-side power related data from the peer optical transceiver via out-of-band (OOB) communication, the method optionally further comprising performing the out-of-band (OOB) communication via one or more out-of-band (OOB) channels, wherein the method optionally further comprises setting up at least one of the one or more out-of-band (OOB) channels when performing power auto-tuning.

13. The method of claim 11 or 12, further comprising disabling power auto-tuning when the peer-side receive (Rx) optical power is below a preset minimum level.

14. The method of any one of claims 11 to 13, wherein the power auto-tuning further comprises:
determining a minimum value for peer-side receive (Rx) optical power; and
adjusting the transmit (Tx) optical power to ensure that the peer-side receive (Rx) damage power is equal to or greater than the minimum value.

15. The method of any one of claims 11 to 14, further comprising
a) performing the power auto-tuning based on a minimum link loss for the optical communication, wherein, optionally, the method further comprises determining the minimum link loss based on one or both of losses in optical connection and losses in one or more other components (other than the optical transceivers) used during the optical communication between the optical transceiver and the peer optical transceiver, and/or the method further comprising
b) performing one or more processing functions during the optical communication between the optical transceiver and the peer optical transceiver, wherein, optionally, the one or more processing functions comprise multiplexing and/or demultiplexing.
